# EUROPEAN PATENT APPLICATION

(11) **EP 3 920 537 A1**
(43) Date of publication of application: **08.12.2021**
(21) Application number: 20869162.6
(22) Date of filing: 22.09.2020
(51) Int. Cl.: H04N 19/50, H04N 19/176, H04N 19/85, H04N 19/44

(54) **VIDEO DECODING METHOD AND APPARATUS, VIDEO ENCODING METHOD AND APPARATUS, STORAGE MEDIUM AND ELECTRONIC DEVICE**

(30) Priority: 27.09.2019 CN 201910927943
(71) Applicant: TENCENT TECHNOLOGY (SHENZHEN) COMPANY LIMITED, Shenzhen, GUANGDONG 518057, (CN)
(72) Inventor: GAO, Xinwei, Shenzhen, Guangdong 518057 (CN); LI, Weiran, Shenzhen, Guangdong 518057 (CN); MAO, Xunan, Shenzhen, Guangdong 518057 (CN); GU, Chenchen, Shenzhen, Guangdong 518057 (CN)
(74) Representative: Eisenführ Speiser
(86) International application number: PCT/CN2020/116652
(87) International publication number: WO 2021/057686

(57) **Abstract**

A video decoding method, comprising: obtaining a first resolution of a block to be decoded in a video frame to be decoded during decoding and a second resolution of a reference block during decoding, wherein the reference block is a reference block for performing directivity prediction on said block in said video frame; in a case that the first resolution is greater than the second resolution, adjusting a reconstruction block of the reference block to the first resolution to obtain a first reconstruction block; and performing directivity prediction on said block according to the first reconstruction block and said block.

## Description

### RELATED APPLICATION

The present disclosure claims priority to Chinese Patent Application No. 201910927943.1, entitled "METHOD AND APPARATUS FOR VIDEO DECODING, STORAGE MEDIUM, AND ELECTRONIC DEVICE" and filed with the China National Intellectual Property Administration on September 27, 2019, which is incorporated herein by reference in its entirety.

### FIELD OF THE TECHNOLOGY

The present disclosure relates to the field of encoding and decoding of audios and videos, and particularly to a method and an apparatus for video decoding, a method and an apparatus for video encoding, a storage medium, and an electronic device.

### BACKGROUND OF THE DISCLOSURE

Development of digital media technologies and computer technologies promotes application of videos in various fields, such as mobile communications, network monitoring, and network televisions. Improvement of hardware performance and screen resolutions brings an increasing demand of users on high-definition videos.

Generally, a conventional codec applies a constant resolution when encoding or decoding video frames under a limited mobile bandwidth, which results in a low peak signal to noise ratio (PSNR) in a part of the bandwidth. Thereby, there is distortion in video frames, resulting in a poor quality of played videos. Different video blocks may be adjusted to have different resolutions for encoding or decoding, in order to reduce the distortion in the video frames. In conventional technology, directional prediction cannot be performed after such adjustment, due to the different resolutions. Consequently, the encoding and the decoding cannot be implemented.

At present, no effective solution has been provided to address the foregoing issue.

### SUMMARY

A method for video decoding is provided, including: obtaining a first resolution adopted in decoding a to-be-decoded block and a second resolution adopted in decoding a reference block, where the to-be-decoded block and the reference block are in a to-be-decoded video frame, and the reference block is a block serving as a reference for directional prediction on the to-be-decoded block; adjusting a reconstructed block of the reference block to have the first resolution, to obtain a first reconstructed block, in a case that the first resolution is higher than the second resolution; and performing the directional prediction on the to-be-decoded block, according to the first reconstructed block and the to-be-decoded block.

A method for video encoding is provided, including: obtaining a first resolution adopted in encoding a to-be-encoded block and a second resolution adopted in encoding a reference block, where the to-be-encoded block and the reference block are in a to-be-encoded video frame, and the reference block is a block serving as a reference for directional prediction on the to-be-encoded block; adjusting a reconstructed block of the reference block to have the first resolution, to obtain a first reconstructed block, in a case that the first resolution is higher than the second resolution; and performing the directional prediction on the to-be-encoded block, according to the first reconstructed block and the to-be-encoded block.

An apparatus for video decoding is provided, including: a first obtaining unit, configured to obtain a first resolution adopted in decoding a to-be-decoded block and a second resolution adopted in decoding a reference block, where the to-be-decoded block and the reference block are in a to-be-decoded video frame, and the reference block is a block serving as a reference for directional prediction on the to-be-decoded block; a first adjustment unit, configured to adjust a reconstructed block of the reference block to have the first resolution, to obtain a first reconstructed block, in a case that the first resolution is higher than the second resolution; and a first prediction unit, configured to perform the directional prediction on the to-be-decoded block, according to the first reconstructed block and the to-be-decoded block.

An apparatus for video encoding is provided, including: a first obtaining unit, configured to obtain a first resolution adopted in encoding a to-be-encoded block and a second resolution adopted in encoding a reference block, where the to-be-encoded block and the reference block are in a to-be-encoded video frame, and the reference block is a block serving as a reference for directional prediction on the to-be-encoded block; a first adjustment unit, configured to adjust a reconstructed block of the reference block to have the first resolution, to obtain a first reconstructed block, in a case that the first resolution is higher than the second resolution; and a first prediction unit, configured to perform the directional prediction on the to-be-encoded block, according to the first reconstructed block and the to-be-encoded block.

In an embodiment, the first adjustment unit includes a first adjustment module, configured to up-sample, through interpolation, first reference pixels in the reconstructed block of the reference block to obtain the first reconstructed block, where the up-sampled first reference pixels have the first resolution, and the first reference pixels are for the directional prediction on the to-be-encoded block; and the first prediction unit includes a first prediction module, configured to perform the directional prediction on the to-be-encoded block, according to the up-sampled first reference pixels and a prediction point in the to-be-encoded block, where the prediction point is a pixel for the directional prediction.

In an embodiment, the apparatus may further include: a second adjustment unit, configured to adjust a reconstructed block of the reference block to have the first resolution, to obtain a second reconstructed block, in a case that the first resolution is lower than the second resolution; and a second prediction unit, configured to perform the directional prediction on the to-be-encoded block, according to the second reconstructed block and the to-be-encoded block.

In an embodiment, the second adjustment unit includes a second adjustment module, configured to down-sample second reference pixels in the reconstructed block of the reference block to obtain the second reconstructed block, where the down-sampled second reference pixels have the first resolution, and the second reference pixels are for the directional prediction on the to-be-encoded block; and the second prediction unit includes a second prediction module, configured to perform the directional prediction on the to-be-encoded block, according to the down-sampled second reference pixels and a prediction point in the to-be-encoded block, where the prediction point is a pixel for the directional prediction.

In an embodiment, the apparatus may further include: a determining unit, configured to determine third reference pixels in the reference block, in a case that the first resolution is lower than the second resolution, where the third reference pixels are for the directional prediction on the to-be-encoded block, and the third reference pixels in each reference block have a resolution equal to the first resolution; and a third prediction unit, configured to perform the directional prediction on the to-be-encoded block, according to the third reference pixels and a prediction point in the to-be-encoded block, where the prediction point is a pixel for the directional prediction.

One or more non-volatile computer-readable storage media storing computer-readable instructions are provided. The computer-readable instructions, when executed by one or more processors, configure the one or more processors to perform following steps: obtaining a first resolution adopted in decoding a to-be-decoded block and a second resolution adopted in decoding a reference block, where the to-be-decoded block and the reference block are in a to-be-decoded video frame, and the reference block is a block serving as a reference for directional prediction on the to-be-decoded block; adjusting a reconstructed block of the reference block to have the first resolution, to obtain a first reconstructed block, in a case that the first resolution is higher than the second resolution; and performing the directional prediction on the to-be-decoded block, according to the first reconstructed block and the to-be-decoded block.

An electronic device is provided, including a memory and one or more processors. The memory stores computer-readable instructions. The computer-readable instructions when executed by the one or more processors configure the one or more processors to perform following steps: obtaining a first resolution adopted in decoding a to-be-decoded block and a second resolution adopted in decoding a reference block, where the to-be-decoded block and the reference block are in a to-be-decoded video frame, and the reference block is a block serving as a reference for directional prediction on the to-be-decoded block; adjusting a reconstructed block of the reference block to have the first resolution, to obtain a first reconstructed block, in a case that the first resolution is higher than the second resolution; and performing the directional prediction on the to-be-decoded block, according to the first reconstructed block and the to-be-decoded block.

One or more non-volatile computer-readable storage media storing computer-readable instructions are provided. The computer-readable instructions, when executed by one or more processors, configure the one or more processors to perform following steps: obtaining a first resolution adopted in encoding a to-be-encoded block and a second resolution adopted in encoding a reference block, where the to-be-encoded block and the reference block are in a to-be-encoded video frame, and the reference block is a block serving as a reference for directional prediction on the to-be-encoded block; adjusting a reconstructed block of the reference block to have the first resolution, to obtain a first reconstructed block, in a case that the first resolution is higher than the second resolution; and performing the directional prediction on the to-be-encoded block, according to the first reconstructed block and the to-be-encoded block.

An electronic device is provided, including a memory and one or more processors. The memory stores computer-readable instructions. The computer-readable instructions when executed by the one or more processors configure the one or more processors to perform following steps: obtaining a first resolution adopted in encoding a to-be-encoded block and a second resolution adopted in encoding a reference block, where the to-be-encoded block and the reference block are in a to-be-encoded video frame, and the reference block is a block serving as a reference for directional prediction on the to-be-encoded block; adjusting a reconstructed block of the reference block to have the first resolution, to obtain a first reconstructed block, in a case that the first resolution is higher than the second resolution; and performing the directional prediction on the to-be-encoded block, according to the first reconstructed block and the to-be-encoded block.

### BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a schematic diagram of an application environment of a method for video decoding according to an embodiment of the present disclosure.
Figure 2 is a flowchart of a method for video decoding according to an embodiment of the present disclosure.
Figure 3 is a schematic diagram of a method for video decoding according to an embodiment of the present disclosure.
Figure 4 is a schematic diagram of another method for video decoding according to an embodiment of the present disclosure.
Figure 5 is a schematic diagram of another method for video decoding according to an embodiment of the present disclosure.
Figure 6 is a schematic diagram of another method for video decoding according to an embodiment of the present disclosure.
Figure 7 is a flowchart of a method for video encoding according to an embodiment of the present disclosure.
Figure 8 is a schematic structural diagram of an apparatus for video decoding according to an embodiment of the present disclosure.
Figure 9 is a schematic structural diagram of an apparatus for video encoding according to an embodiment of the present disclosure.
Figure 10 is a schematic structural diagram of an electronic device according to an embodiment of the present disclosure.
Figure 11 is a schematic structural diagram of another electronic device according to an embodiment of the present disclosure.

### DESCRIPTION OF EMBODIMENTS

In order to help those skilled in the art better understand solutions of the present disclosure, hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

In specification, claims, and drawings of the present disclosure, the terms "first", "second", and the like are intended to distinguish similar objects but do not necessarily indicate a specific order or sequence. It should be understood that data described in such manner is interchangeable where appropriate, so that embodiments of the present disclosure described herein may be implemented in an order other than that is illustrated or described herein. Moreover, the terms "include", "comprise", and any other variants thereof are intended to cover non-exclusive inclusion. For example, a process, a method, a system, a product, or a device that includes a list of steps or units is not necessarily limited to these expressly listed steps or units, but may include another step or another unit that is not expressly listed or that is inherent to such process, method, system, product, or device.

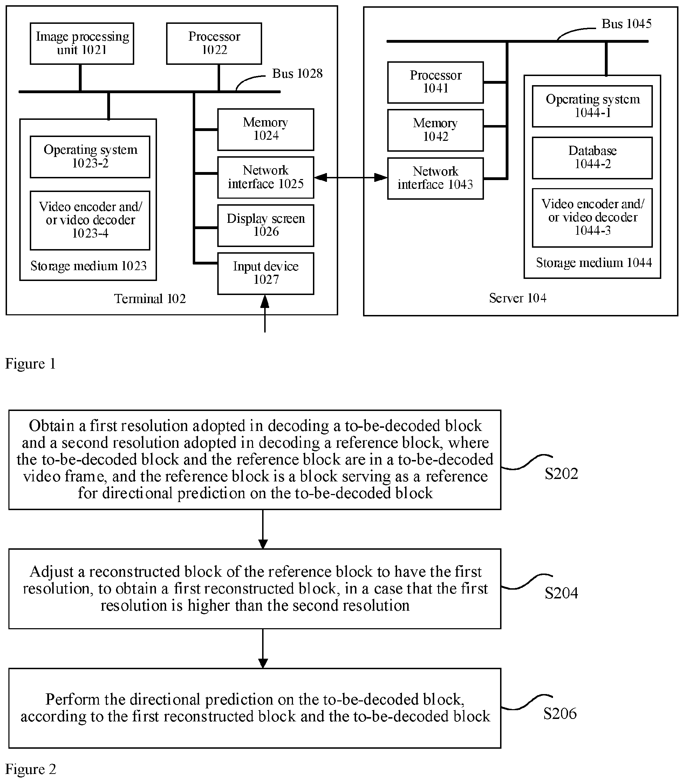

A method for video decoding is provided in one aspect of embodiments of the present disclosure. In an optional embodiment, the method for video decoding may be applied, but is not limited, to an application environment as shown in Figure 1. The application environment includes a terminal 102 and a server 104. The terminal 102 communicates with the server 104 via a network. The terminal 102 may be, but is not limited to, a smartphone, a tablet computer, a laptop computer, a desktop computer, or the like. The server 104 may be, but is not limited to, a computer processing device having a strong capability of data processing and a certain storage space.

A method for video encoding, which corresponds to the foregoing method for video decoding, may also be applied, but is not limited, to the application environment as shown in Figure 1. A to-be-encoded video after being obtained may, but is not limited to, be processed through the method for video encoding according to embodiments of the present disclosure. A resolution of a reference block may be adjusted, and then directional prediction may be performed on the to-be-encoded block, during interaction between the terminal 102 and the server 104 as shown in Figure 1. Hence, the to-be-encoded video can be encoded when video blocks have different resolutions. In addition, a to-be-decoded video after being obtained may, but is not limited to, be processed through the method for video decoding according to embodiments of the present disclosure. A resolution of a reference block may be adjusted, and then directional prediction may be performed on the to-be-decoded block, during interaction between the terminal 102 and the server 104 as shown in Figure 1. Hence, the to-be-decoded video can be decoded when video blocks have different resolutions.

In an embodiment as shown in Figure 1, the terminal 102 may include, but is not limited to, an image processing unit 1021, a processor 1022, a storage medium 1023, a memory 1024, a network interface 1025, a display screen 1026, and an input device 1027. The foregoing components may, but is not limited to, be connected via a system bus 1028. The image processing unit 1021 is configured to provide at least a capability of rendering on a display interface. The processor 1022 is configured to provide capabilities of computing and control, to support running of the terminal 102. The storage medium 1023 stores an operating system 1023-2, a video encoder and/or a video decoder 1023-4. The operating system 1023-2 is configured to provide control operation instructions. The video encoder and/or the video decoder 1023-4 is configured to perform encoding or decoding operations according to the control operation instructions. In addition, the memory provides an executing environment in the storage medium 1023, for the video encoder and/or the video decoder 1023-4, and the network interface 1025 is configured to perform network communication with a network interface 1043 in the server 104. The display screen is configured to display an application interface or the like, which is configured to, for example, decode a video. The input device 1027 is configured to receive a command, data, or the like, which is inputted by a user. In a case that the terminal 102 has a touchscreen, the display screen 1026 and the input device 1027 may be the touchscreen. Only a part of an internal structure of the terminal 102, which is related to solutions of the present disclosure, is shown in the block diagram of Figure 1, and such part does not constitute a limitation on terminals to which the solutions of the present disclosure may be applied. A specific terminal or server may include components more or fewer than those as shown in the figure. Some components may be combined, or a different deployment of the components may be adopted.

In an embodiment as shown in Figure 1, the server 104 may include, but is not limited to, a processor 1041, a memory 1042, a network interface 1043, and a storage medium 1044. The foregoing components may, but is not limited to, be connected via a system bus 1045. The storage medium 1044 includes an operating system 1044-1, a database 1044-2, a video encoder and/or a video decoder 1044-3. The processor 1041 is configured to provide capabilities of computing and control, to support running of the server 104. The memory 1042 provides an executing environment in the storage medium 1044, for the video encoder and/or the video decoder 1044-3. The network interface 1043 communicates with the network interface 1025 of the external terminal 102 via a network. The operating system 1044-1 in the storage medium is configured to provide control operation instructions. The video encoder and/or the video decoder 1044-3 is configured to perform encoding or decoding operations according to the control operation instructions. The database 1044-2 is configured to store data. Only a part of an internal structure of the server 104, which is related to solutions of the present disclosure, is shown in the block diagram in Figure 1, and such part does not constitute a limitation on terminals to which the solutions of the present disclosure may be applied. A specific terminal or server may include components more or fewer than those as shown in the figure. Some components may be combined, or a different deployment of the components may be adopted.

In an embodiment, the foregoing network may include, but is not limited to, a wired network. The wired network may include, but is not limited to, a wide area network, a metropolitan area network, and a local area network. The foregoing is merely examples, and this embodiment is not limited thereto.

A method for video decoding is provided according to an aspect of embodiments of the present disclosure. As shown in Figure 2, the method includes steps S202 to S204.

In step S202, a first resolution adopted in decoding a to-be-decoded block and a second resolution adopted in decoding a reference block are obtained. The to-be-decoded block and the reference block are in a to-be-decoded video frame, and the reference block is a block serving as a reference for directional prediction on the to-be-decoded block.

In step S204, in a case that the first resolution is higher than the second resolution, a reconstructed block of the reference block is adjusted to have the first resolution, so as to obtain a first reconstructed block.

In step S206, the directional prediction is performed on the to-be-decoded block, according to the first reconstructed block and the to-be-decoded block.

The method for video decoding as shown in Figure 2 may be applied, but is not limited, to the video decoder as shown in Figure 1. The video decoder interacts with other components to implement the decoding process of the to-be-decoded video frame.

In this embodiment, the method for video decoding may be optionally applied, but is not limited to, application scenarios such as video playback applications, video sharing applications, or video session applications. A video transmitted in the foregoing application scenarios may include, but is not limited to, a long video or a short video. For example, a long video may be a TV-drama episode running for a long time (for example, longer than 10 minutes), or what is displayed in a long video call. A short video may be a video message transmitted between two or more parties, or a video running for a short time (for example, less than or equal to 30 seconds) and displayed on a sharing platform. The foregoing is merely examples. The method for video decoding according to this embodiment may be applied, but is not limited, to a playing device configured to play videos in the foregoing application scenarios. After encoded bit stream data is obtained, the directional prediction is performed on to-be-decoded blocks in each to-be-decoded video frame, so as to implement decoding.

During video encoding, different video blocks in a video frame may be encoded under different resolutions, so as to address an issue of distortion caused by a constant resolution in conventional technology, and ensure a quality of played video. In this embodiment, when the first resolution of the to-be-decoded block is greater than the second resolution of the reference block during video decoding, the reconstructed block of the reference block may be adjusted to have the first resolution, so as to obtain the first reconstructed block. Thereby, the directional prediction may be performed on the to-be-decoded block, according to the first reconstructed block and the to-be-decoded block that have the same resolution. In this embodiment, it is required to adjust the resolution of the reference block. The adjustment herein may be performed on the resolution of the reconstructed block of the reference block, so that the directional prediction can be performed on the to-be-decoded block without actually changing the original reference block. It is appreciated that such concept may be applied to an encoding process.

In this embodiment, the first resolution adopted in decoding the to-be-decoded block and the second resolution adopted in decoding the reference block in the to-be-decoded video frame are obtained. In a case that the first resolution is higher than the second resolution, the reconstructed block of the reference block is adjusted to have the first resolution, to obtain the first reconstructed block. Thereby, the first reconstructed block and the to-be-decoded block have identical resolutions after the adjustment. The directional prediction may be performed on the to-be-decoded block according to the first reconstructed block and the to-be-decoded block. Achieved is a technical effect that directional prediction can be performed even when video blocks have different resolutions, and addressed is a technical issue that directional prediction cannot be performed due to different resolutions of video blocks.

In an optional embodiment, after a to-be-decoded video frame in a to-be-decoded video is determined from a bit stream received from an encoding device, and before the to-be-decoded video frame is decoded, the process may include, but is not limited to, a following step. A reference video frame may be determined from video frames decoded before decoding the to-be-decoded video frame, such that the reference block is determined from the reference video frame. In this embodiment, an encoding mode of the reference video frame may be determined in following manners.

In a first manner, a preset flag bit is obtained from the bit stream, and the encoding mode adopted by the reference video frame is determined according to the flag bit. The encoding mode is, for example, intra-frame encoding or inter-frame encoding.

In a second manner, decoding is first performed according to a protocol with an encoding device at an encoder side, and then the encoding mode adopted by the decoded reference video frame is determined. The encoding mode is, for example, intra-frame encoding or inter-frame encoding.

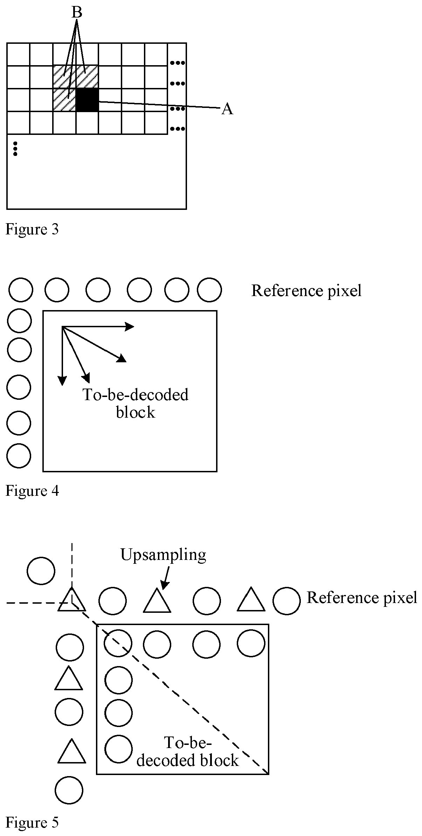

The reference block(s) in an embodiment of the present disclosure may be as shown in Figure 3. The directional prediction may be performed according to an upper reference edge and a left reference edge of the to-be-decoded block A. Hence, in this embodiment, the reference block may be a video block at a left side of the to-be-decoded block, a video block at an upper side of the to-be-decoded block, or a video block at an upper-left corner of the to-be-decoded block, that is, the video block B shown in Figure 3. The reference block(s) determined as above is only an optional embodiment of the present disclosure, and determining of the reference block(s) is not limited thereto. In embodiments of the present disclosure, a quantity of the reference block(s) may be one or more.

In embodiments of the present disclosure, the directional prediction on a current to-be-decoded block may be performed according to multiple pixels in the reference block(s), as shown in Figure 4, when performing the directional prediction on the to-be-decoded block according to the reference block(s). Such pixels may be referred to as reference pixels.

In an optional embodiment, adjusting the reconstructed block of the reference block to have the first resolution to obtain a first reconstructed block includes a following step. First reference pixels in the reconstructed block of the reference block are up-sampled through interpolation to obtain the first reconstructed block, where the up-sampled first reference pixels have the first resolution. The first reference pixels are for the directional prediction on the to-be-decoded block. Performing the directional prediction on the to-be-decoded block according to the first reconstructed block and the to-be-decoded block includes a following step. The directional prediction is performed on the to-be-decoded block, according to the up-sampled first reference pixels and a prediction point in the to-be-decoded block. The prediction point is a pixel for the directional prediction. As shown in Figure 5, the directional prediction is performed according to the reference pixels in embodiments of the present disclosure. Therefore, when adjusting the resolution of the reference block, it may be not necessary to adjust the whole reference block, and up-sampling may be performed through interpolation only on the first reference pixels in the reconstructed block of the reference block. Hence, less computing resources are consumed.

In an optional embodiment, after obtaining the first resolution adopted in decoding the to-be-decoded block and the second resolution adopted in decoding the reference block, the method further includes a following step. In a case that the first resolution is lower than the second resolution, a reconstructed block of the reference block is adjusted to have the first resolution, so as to obtain a second reconstructed block. The directional prediction is performed on the to-be-decoded block, according to the second reconstructed block and the to-be-decoded block. When the first resolution is lower than the second resolution, the reconstructed block of the reference block may be adjusted to have the first resolution, so as to obtain the second reconstructed block. Thereby, the directional prediction may be performed on the to-be-decoded block according to the second reconstructed block and the to-be-decoded block that have the same resolution. The reconstructed block of the reference block may be adjusted through down-sampling, in order to have the first resolution.

In an optional embodiment, adjusting the reconstructed block of the reference block to have the first resolution to obtain the second reconstructed block includes a following step. Second reference pixels in the reconstructed block of the reference block are down-sampled to obtain the second reconstructed block, where the down-sampled second reference pixels have the first resolution. The second reference pixels are for the directional prediction on the to-be-decoded block. Performing the directional prediction on the to-be-decoded block according to the second reconstructed block and the to-be-decoded block includes a following step. The directional prediction is performed on the to-be-decoded block, according to the second reference pixel and a prediction point in the to-be-decoded block. The prediction point is a pixel for the directional prediction. In this embodiment, the directional prediction is performed according to the reference pixels. Therefore, when adjusting the resolution of the reference block, it may be not necessary to adjust the whole reference block, and down-sampling may be performed only on the second reference pixels in the reconstructed block of the reference block. Hence, less computing resources are consumed.

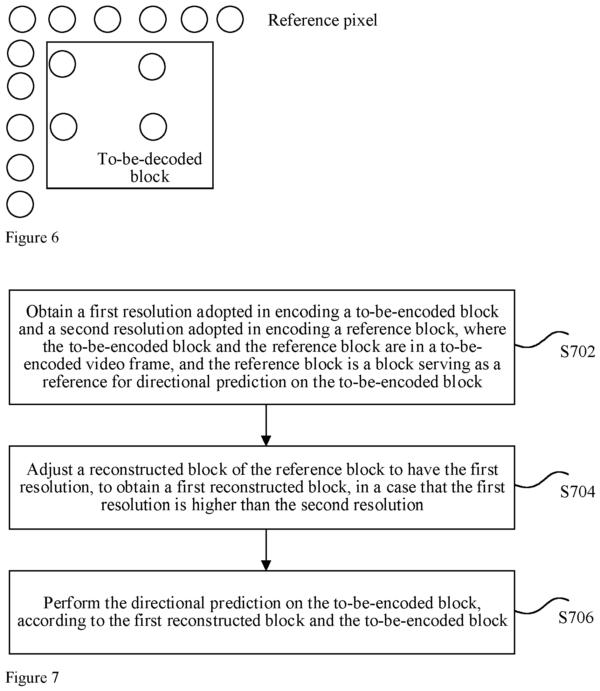

In an optional embodiment, after obtaining the first resolution adopted in decoding the to-be-decoded block and the second resolution adopted in decoding the reference block, the method further includes following steps. In a case that the first resolution is lower than the second resolution, third reference pixels are determined in the reference block, where the third reference pixels are for the directional prediction on the to-be-decoded block, and the third reference pixels in each reference block have a resolution equal to the first resolution. The directional prediction is performed on the to-be-decoded block, according to the third reference pixels and a prediction point in the to-be-decoded block, where the prediction point is a pixel for the directional prediction. In embodiments of the present disclosure, when the first resolution is lower than the second resolution, the reference block may be adjusted to have the first resolution according to the foregoing embodiment. Alternatively, the reference block may not be adjusted in resolution. Pixels at corresponding positions, i.e. the third reference pixels, may be selected from the reference block for the directional prediction, so that adjustment on the resolution is not necessary. As shown in Figure 6, directional prediction is performed based on the third reference pixels determined according to embodiments of the present disclosure. In such case, when up-sampling is required for directional prediction of a same resolution, it is not necessary to perform the up-sampling, and pixels other than the third reference pixels may replace a result of interpolation, since the second resolution is higher than the first resolution. Hence, the directional prediction is implemented.

A method for video encoding is provided according to another aspect of the embodiments of the present disclosure. As shown in Figure 7, the method includes steps S702 to S706.

In step 702, a first resolution adopted in encoding a to-be-encoded block and a second resolution adopted in encoding a reference block are obtained. The to-be-encoded block and the reference block are in a to-be-encoded video frame, and the reference block is a block serving as a reference for directional prediction on the to-be-encoded block.

In step S704, in a case that the first resolution is higher than the second resolution, a reconstructed block of the reference block is adjusted to have the first resolution, so as to obtain a first reconstructed block.

In step S706, the directional prediction is performed on the to-be-encoded block, according to the first reconstructed block and the to-be-encoded block.

The method for video encoding as shown in Figure 7 may be applied, but is not limited, to the video encoder as shown in Figure 1. The video encoder interacts with other components to implement the encoding process of the to-be-encoded video frame.

In this embodiment, the method for video encoding may be optionally applied, but is not limited to, application scenarios such as video playback applications, video sharing applications, or video session applications. A video transmitted in the foregoing application scenarios may include, but is not limited to, a long video or a short video. For example, a long video may be a TV-drama episode running for a long time (for example, longer than 10 minutes), or what is displayed in a long video call. A short video may be a video message transmitted between two or more parties, or a video running for a short time (for example, less than or equal to 30 seconds) and displayed on a sharing platform. The foregoing is merely examples. The method for video encoding according to this embodiment may be applied, but is not limited, to a playing device configured to play videos in the foregoing application scenarios. After bit stream data is obtained before encoding, the directional prediction is performed on to-be-encoded blocks in each to-be-encoded video frame, so as to implement the encoding.

During video encoding, different video blocks in a video frame may be encoded under different resolutions, so as to address an issue of distortion caused by a constant resolution in conventional technology, and ensure a quality of played video. In this embodiment, the resolution of the to-be-encoded block in the to-be-encoded video frame is adjusted to a target resolution to obtain the first reconstructed block. A forward reference frame and a backward reference frame of the to-be-encoded block are adjusted to have the target resolution, and are combined into a virtual reference frame, thereby facilitating determining of a motion vector (MV) of the first reconstructed block relative to a corresponding region in the virtual reference frame. The MV of the first reconstructed block relative to the corresponding region in the virtual reference frame may serve as a MV of the to-be-encoded block. In this embodiment, when the first resolution of the to-be-encoded block is greater than the second resolution of the reference block during video encoding, the reconstructed block of the reference block may be adjusted to have the first resolution, so as to obtain the first reconstructed block. Thereby, the directional prediction may be performed on the to-be-encoded block, according to the first reconstructed block and the to-be-encoded block that have the same resolution. In this embodiment, it is required to adjust the resolution of the reference block. The adjustment herein may be performed on the resolution of the reconstructed block of the reference block, so that the directional prediction can be performed on the to-be-encoded block without actually changing the original reference block. It is appreciated that such concept may be applied to a decoding process.

It can be appreciated that the method for video encoding in this embodiment and the foregoing method for video decoding may refer to each other.

In an optional embodiment, adjusting the reconstructed block of the reference block to have the first resolution to obtain a first reconstructed block includes a following step. First reference pixels in the reconstructed block of the reference block are up-sampled through interpolation to obtain the first reconstructed block, where the up-sampled first reference pixels have the first resolution. The first reference pixels are for the directional prediction on the to-be-encoded block. Performing the directional prediction on the to-be-encoded block according to the first reconstructed block and the to-be-encoded block includes a following step. The directional prediction is performed on the to-be-encoded block, according to the up-sampled first reference pixels and a prediction point in the to-be-encoded block. The prediction point is a pixel for the directional prediction. In this embodiment, the directional prediction is performed according to the reference pixels. Therefore, when adjusting the resolution of the reference block, it may be not necessary to adjust the whole reference block, and up-sampling may be performed through interpolation only on the first reference pixels in the reconstructed block of the reference block. Hence, less computing resources are consumed.

In an optional embodiment, after obtaining the first resolution adopted in encoding the to-be-encoded block and the second resolution adopted in encoding the reference block, the method further includes a following step. In a case that the first resolution is lower than the second resolution, a reconstructed block of the reference block is adjusted to have the first resolution, so as to obtain a second reconstructed block. The directional prediction is performed on the to-be-encoded block, according to the second reconstructed block and the to-be-encoded block. When the first resolution is lower than the second resolution, the reconstructed block of the reference block may be adjusted to have the first resolution, so as to obtain the second reconstructed block. Thereby, the directional prediction may be performed on the to-be-encoded block according to the second reconstructed block and the to-be-encoded block that have the same resolution. The reconstructed block of the reference block may be adjusted through down-sampling, in order to have the first resolution.

In an optional embodiment, adjusting the reconstructed block of the reference block to have the first resolution to obtain the second reconstructed block includes a following step. Second reference pixels in the reconstructed block of the reference block are down-sampled to obtain the second reconstructed block, where the down-sampled second reference pixels have the first resolution. The second reference pixels are for the directional prediction on the to-be-encoded block. Performing the directional prediction on the to-be-encoded block according to the second reconstructed block and the to-be-encoded block includes a following step. The directional prediction is performed on the to-be-encoded block, according to the second reference pixel and a prediction point in the to-be-encoded block. The prediction point is a pixel for the directional prediction. In this embodiment, the directional prediction is performed according to the reference pixels. Therefore, when adjusting the resolution of the reference block, it may be not necessary to adjust the whole reference block, and down-sampling may be performed only on the second reference pixels in the reconstructed block of the reference block. Hence, less computing resources are consumed.

In an optional embodiment, after obtaining the first resolution adopted in encoding the to-be-encoded block and the second resolution adopted in encoding the reference block, the method further includes following steps. In a case that the first resolution is lower than the second resolution, third reference pixels are determined in the reference block, where the third reference pixels are for the directional prediction on the to-be-encoded block, and the third reference pixels in each reference block have a resolution equal to the first resolution. The directional prediction is performed on the to-be-encoded block, according to the third reference pixels and a prediction point in the to-be-encoded block, where the prediction point is a pixel for the directional prediction. In embodiments of the present disclosure, when the first resolution is lower than the second resolution, the reference block may be adjusted to have the first resolution according to the foregoing embodiment. Alternatively, the reference block may not be adjusted in resolution. Pixels at corresponding positions, i.e. the third reference pixels, may be selected from the reference block for the directional prediction, so that adjustment on the resolution is not necessary. As shown in Figure 6, directional prediction is performed based on the third reference pixels determined according to embodiments of the present disclosure. In such case, when up-sampling is required for directional prediction of a same resolution, it is not necessary to perform the up-sampling, and pixels other than the third reference pixels may replace a result of interpolation, since the second resolution is higher than the first resolution. Hence, the directional prediction is implemented.

The foregoing method embodiments are described as a combination of a series of operations, for concise and brief description. Those skilled in the art shall appreciate that the present disclosure is not limited to the order of describing these operations, because some steps may be performed simultaneously or in another order according to embodiments of the present disclosure. In addition, those skilled in the art shall further appreciate that all embodiments described in this specification are exemplary embodiments, and some actions and modules that are involved are not necessary to the present disclosure.

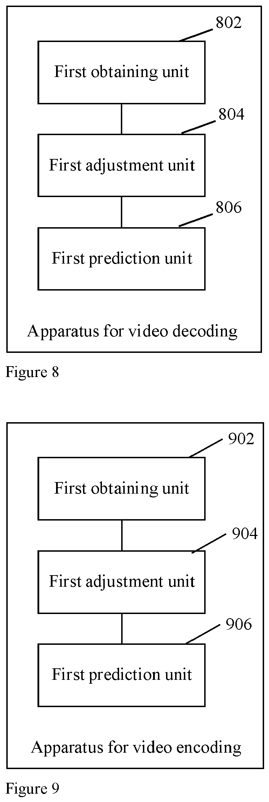

An apparatus for video decoding is provided to implement the foregoing method for video decoding, according to another aspect of embodiments of the present disclosure. As shown in Figure 8, the apparatus includes a first obtaining unit 802, a first adjustment unit 804, and a first prediction unit 806.

The first obtaining unit 802 is configured to obtain a first resolution adopted in decoding a to-be-decoded block and a second resolution adopted in decoding a reference block. The to-be-decoded block and the reference block are in a to-be-decoded video frame, and the reference block is a block serving as a reference for directional prediction on the to-be-decoded block.

The first adjustment unit 804 is configured to adjust a reconstructed block of the reference block to have the first resolution, so as to obtain a first reconstructed block, in a case that the first resolution is higher than the second resolution.

The first prediction unit 806 is configured to perform the directional prediction on the to-be-decoded block, according to the first reconstructed block and the to-be-decoded block.

Specific embodiments may refer to those in describing the foregoing method for video decoding, and details are not described again herein.

In an optional embodiment, the first adjustment unit includes a first adjustment module. The first adjustment module is configured to up-sample, through interpolation, first reference pixels in the reconstructed block of the reference block to obtain the first reconstructed block. The up-sampled first reference pixels have the first resolution, and the first reference pixels are for the directional prediction on the to-be-decoded block. The first prediction unit includes a first prediction module. The first prediction module is configured to perform the directional prediction on the to-be-decoded block, according to the up-sampled first reference pixels and a prediction point in the to-be-decoded block. The prediction point is a pixel for the directional prediction.

Specific embodiments may refer to those in describing the foregoing method for video decoding, and details are not described again herein.

In an optional embodiment, the foregoing apparatus may further include a second adjustment unit and a second prediction unit. The second adjustment unit is configured to adjust a reconstructed block of the reference block to have the first resolution, so as to obtain a second reconstructed block, in a case that the first resolution is lower than the second resolution. The second prediction unit is configured to perform the directional prediction on the to-be-decoded block, according to the second reconstructed block and the to-be-decoded block.

Specific embodiments may refer to those in describing the foregoing method for video decoding, and details are not described again herein.

In an optional embodiment, the second adjustment unit includes a second adjustment module. The second adjustment module is configured to down-sample second reference pixels in the reconstructed block of the reference block to obtain the second reconstructed block. The down-sampled second reference pixels have the first resolution, and the second reference pixels are for the directional prediction on the to-be-decoded block. The second prediction unit includes a second prediction module. The second prediction module is configured to perform the directional prediction on the to-be-decoded block, according to the down-sampled second reference pixels and a prediction point in the to-be-decoded block. The prediction point is a pixel for the directional prediction.

Specific embodiments may refer to those in describing the foregoing method for video decoding, and details are not described again herein.

In an optional embodiment, the foregoing apparatus may further include a determining unit and a third prediction unit. The determining unit is configured to determine third reference pixels in the reference block, in a case that the first resolution is lower than the second resolution. The third reference pixels are for the directional prediction on the to-be-encoded block, and the third reference pixels in each reference block have a resolution equal to the first resolution. The third prediction unit is configured to perform the directional prediction on the to-be-encoded block, according to the third reference pixels and a prediction point in the to-be-encoded block. The prediction point is a pixel for the directional prediction.

Specific embodiments may refer to those in describing the foregoing method for video decoding, and details are not described again herein.

An apparatus for video encoding is provided to implement the foregoing method for video encoding, according to another aspect of embodiments of the present disclosure. As shown in Figure 9, the apparatus includes a first obtaining unit 902, a first adjustment unit 904, and a first prediction unit 906.

The first obtaining unit 902 is configured to obtain a first resolution adopted in encoding a to-be-encoded block and a second resolution adopted in encoding a reference block. The to-be-encoded block and the reference block are in a to-be-encoded video frame, and the reference block is a block serving as a reference for directional prediction on the to-be-encoded block.

The first adjustment unit 904 is configured to adjust a reconstructed block of the reference block to have the first resolution, so as to obtain a first reconstructed block, in a case that the first resolution is higher than the second resolution.

The first prediction unit 906 is configured to perform the directional prediction on the to-be-encoded block, according to the first reconstructed block and the to-be-encoded block.

Specific embodiments may refer to those in describing the foregoing method for video encoding, and details are not described again herein.

In an optional embodiment, the first adjustment unit includes a first adjustment module. The first adjustment module is configured to up-sample, through interpolation, first reference pixels in the reconstructed block of the reference block to obtain the first reconstructed block. The up-sampled first reference pixels have the first resolution, and the first reference pixels are for the directional prediction on the to-be-encoded block. The first prediction unit includes a first prediction module. The first prediction module is configured to perform the directional prediction on the to-be-encoded block, according to the up-sampled first reference pixels and a prediction point in the to-be-encoded block. The prediction point is a pixel for the directional prediction.

Specific embodiments may refer to those in describing the foregoing method for video encoding, and details are not described again herein.

In an optional embodiment, the foregoing apparatus may further include a second adjustment unit and a second prediction unit. The second adjustment unit is configured to adjust a reconstructed block of the reference block to have the first resolution, so as to obtain a second reconstructed block, in a case that the first resolution is lower than the second resolution. The second prediction unit is configured to perform the directional prediction on the to-be-encoded block, according to the second reconstructed block and the to-be-encoded block.

Specific embodiments may refer to those in describing the foregoing method for video encoding, and details are not described again herein.

In an optional embodiment, the second adjustment unit includes a second adjustment module. The second adjustment module is configured to down-sample second reference pixels in the reconstructed block of the reference block to obtain the second reconstructed block. The down-sampled second reference pixels have the first resolution, and the second reference pixels are for the directional prediction on the to-be-encoded block. The second prediction unit includes a second prediction module. The second prediction module is configured to perform the directional prediction on the to-be-encoded block, according to the down-sampled second reference pixels and a prediction point in the to-be-encoded block. The prediction point is a pixel for the directional prediction.

Specific embodiments may refer to those in describing the foregoing method for video encoding, and details are not described again herein.

In an optional embodiment, the foregoing apparatus may further include a determining unit and a third prediction unit. The determining unit is configured to determine third reference pixels in the reference block, in a case that the first resolution is lower than the second resolution. The third reference pixels are for the directional prediction on the to-be-encoded block, and the third reference pixels in each reference block have a resolution equal to the first resolution. The third prediction unit is configured to perform the directional prediction on the to-be-encoded block, according to the third reference pixels and a prediction point in the to-be-encoded block. The prediction point is a pixel for the directional prediction.

Specific embodiments may refer to those in describing the foregoing method for video encoding, and details are not described again herein.

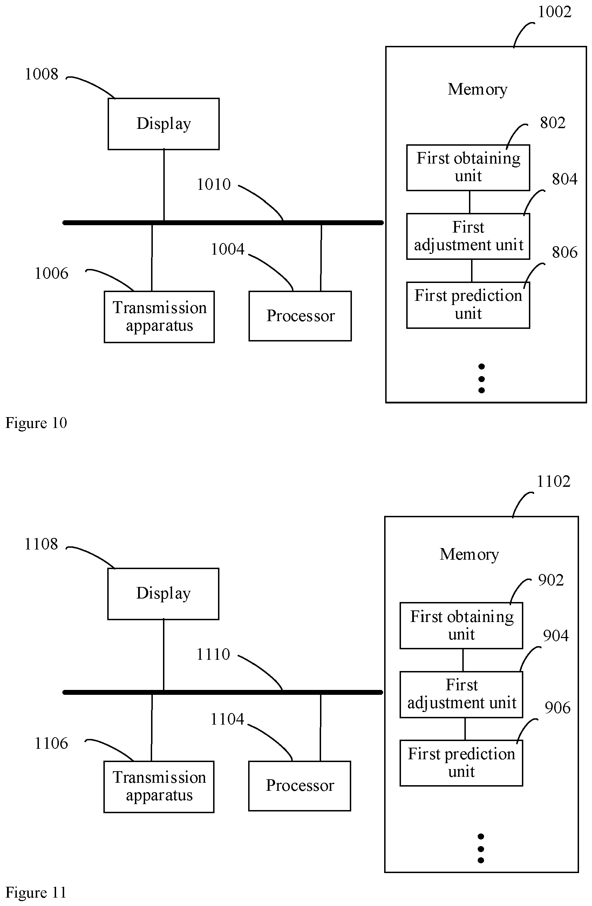

An electronic device for implementing the foregoing method for video decoding is further provided according to another aspect of embodiments of the present disclosure. As shown in Figure 10, the electronic device includes a memory and a processor. The memory stores computer-readable instructions, and the processor is configured to perform steps in any foregoing method embodiment through the computer-readable instructions.

In an optional embodiment, the electronic device may be located in at least one of multiple network devices located in a computer network.

In an optional embodiment, the foregoing processor may be configured to perform following steps through the computer-readable instructions.

A first resolution adopted in decoding a to-be-decoded block and a second resolution adopted in decoding a reference block are obtained. The to-be-decoded block and the reference block are in a to-be-decoded video frame, and the reference block is a block serving as a reference for directional prediction on the to-be-decoded block.

In a case that the first resolution is higher than the second resolution, a reconstructed block of the reference block is adjusted to have the first resolution, so as to obtain a first reconstructed block.

The directional prediction is performed on the to-be-decoded block, according to the first reconstructed block and the to-be-decoded block.

The method for video decoding as shown in Figure 2 may be applied, but is not limited, to the video decoder as shown in Figure 1. The video decoder interacts with other components to implement the decoding process of the to-be-decoded video frame.

Those skilled in the art can understand that the structure as shown in Figure 10 is only illustrative. The electronic device may be alternatively a terminal device such as a smartphone (for example, an Android mobile phone or an iOS mobile phone), a tablet computer, a palmtop computer, a mobile Internet device (MID), or a PAD. Figure 10 does not limit the structure of the electronic device. For example, the electronic device may further include more or fewer components (such as a network interface) than those as shown in Figure 10, or have a configuration different from that as shown in Figure 10.

The memory 1002 may be configured to store a software program and a module, for example, a program instruction/module corresponding to the method and apparatus for executing the action according to embodiments of the present disclosure. The processor 1004 performs various functional applications and data processing, that is, implements the foregoing action execution method, by running a software program and a module stored in the memory 1002. The memory 1002 may include a high-speed random memory, and may include a non-volatile memory, for example, one or more magnetic storage apparatuses, a flash memory, or another nonvolatile solid-state memory. In some embodiments, the memory 1002 may further include memories disposed remotely relative to the processor 1004, and the remote memories may be connected to a terminal via a network. Examples of the network include, but are not limited to, the Internet, an intranet, a local area network, a mobile communication network, or a combination thereof. In a specific embodiment, the memory 1002 may be configured, but is not limited, to store information such as the to-be decoded block. In an example as shown in Figure 10, the memory 1002 may include, but is not limited to, the first obtaining unit 802, the first adjustment unit 804, and the first prediction unit 806 in the foregoing apparatus for video decoding. In addition, the memory may further include, but is not limited to, other modules and units in the foregoing apparatus for video decoding. Details are not described again herein.

In an optional embodiment, a transmission apparatus 1006 is configured to receive or transmit data via a network. Specific examples of the network may include a wired network and a wireless network. As an example, the transmission device 1006 includes a network interface controller (NIC). The NIC may be connected to another network device and a router via a network cable, to communicate with the Internet or a local area network. As an example, the transmission device 1006 is a radio frequency (RF) module which communicates with the Internet wirelessly.

In addition, the electronic device further includes a display 1008 and a connection bus 1010. The display 1008 is configured to display a decoded video. The connection bus 1010 is configured to connect various modular components in the foregoing electronic device.

An electronic device for implementing the foregoing method for video encoding is further provided according to another aspect of embodiments of the present disclosure. As shown in Figure 11, the electronic device includes a memory and a processor. The memory stores computer-readable instructions, and the processor is configured to perform steps in any foregoing method embodiment through the computer-readable instructions.

In an optional embodiment, the electronic device may be located in at least one of multiple network devices located in a computer network.

In an optional embodiment, the foregoing processor may be configured to perform following steps through the computer-readable instructions.

A first resolution adopted in encoding a to-be-encoded block and a second resolution adopted in encoding a reference block are obtained. The to-be-encoded block and the reference block are in a to-be-encoded video frame, and the reference block is a block serving as a reference for directional prediction on the to-be-encoded block.

In a case that the first resolution is higher than the second resolution, a reconstructed block of the reference block is adjusted to have the first resolution, so as to obtain a first reconstructed block.

The directional prediction is performed on the to-be-encoded block, according to the first reconstructed block and the to-be-encoded block.

The method for video encoding as shown in Figure 2 may be applied, but is not limited, to the video encoder as shown in Figure 1. The video encoder interacts with other components to implement the encoding process of the to-be-encoded video frame.

Those skilled in the art can understand that the structure as shown in Figure 11 is only illustrative. The electronic device may be alternatively a terminal device such as a smartphone (for example, an Android mobile phone or an iOS mobile phone), a tablet computer, a palmtop computer, a mobile Internet device (MID), or a PAD. Figure 11 does not limit the structure of the electronic device. For example, the electronic device may further include more or fewer components (such as a network interface) than those as shown in Figure 11, or have a configuration different from that as shown in Figure 11.

The memory 1102 may be configured to store a software program and a module, for example, a program instruction/module corresponding to the method and apparatus for executing the action according to embodiments of the present disclosure. The processor 1104 performs various functional applications and data processing, that is, implements the foregoing action execution method, by running a software program and a module stored in the memory 1102. The memory 1102 may include a high-speed random memory, and may include a non-volatile memory, for example, one or more magnetic storage apparatuses, a flash memory, or another nonvolatile solid-state memory. In some embodiments, the memory 1102 may further include memories disposed remotely relative to the processor 1104, and the remote memories may be connected to a terminal via a network. Examples of the network include, but are not limited to, the Internet, an intranet, a local area network, a mobile communication network, or a combination thereof. In a specific embodiment, the memory 1102 may be configured, but is not limited, to store information such as the to-be encoded block. In an example as shown in Figure 11, the memory 1102 may include, but is not limited to, the first obtaining unit 902, the first adjustment unit 904, and the first prediction unit 906 in the foregoing apparatus for video encoding. In addition, the memory may further include, but is not limited to, other modules and units in the foregoing apparatus for video encoding. Details are not described again herein.

In an optional embodiment, a transmission apparatus 1106 is configured to receive or transmit data via a network. Specific examples of the network may include a wired network and a wireless network. As an example, the transmission device 1106 includes a network interface controller (NIC). The NIC may be connected to another network device and a router via a network cable, to communicate with the Internet or a local area network. As an example, the transmission device 1106 is a radio frequency (RF) module which communicates with the Internet wirelessly.

In addition, the electronic device further includes a display 1108 and a connection bus 1110. The display 1108 is configured to display a video before encoding. The connection bus 1110 is configured to connect various modular components in the foregoing electronic device.

A storage medium storing computer-readable instructions is further provided according to embodiments of the present disclosure. The computer-readable instructions when being executed are configured to perform steps in any foregoing method embodiments.

In an optional embodiment, the storage medium may be configured to store computer-readable instructions for performing following steps S 1 to S3.

In step S1, a first resolution adopted in decoding a to-be-decoded block and a second resolution adopted in decoding a reference block are obtained. The to-be-decoded block and the reference block are in a to-be-decoded video frame, and the reference block is a block serving as a reference for directional prediction on the to-be-decoded block.

In step S2, in a case that the first resolution is higher than the second resolution, a reconstructed block of the reference block is adjusted to have the first resolution, so as to obtain a first reconstructed block.

In step S3, the directional prediction is performed on the to-be-decoded block, according to the first reconstructed block and the to-be-decoded block.

In an optional embodiment, the storage medium may be configured to store computer-readable instructions for performing following steps S1 to S3

In step S1, a first resolution adopted in encoding a to-be-encoded block and a second resolution adopted in encoding a reference block are obtained. The to-be-encoded block and the reference block are in a to-be-encoded video frame, and the reference block is a block serving as a reference for directional prediction on the to-be-encoded block.

In step S2, in a case that the first resolution is higher than the second resolution, a reconstructed block of the reference block is adjusted to have the first resolution, so as to obtain a first reconstructed block.

In step S3, the directional prediction is performed on the to-be-encoded block, according to the first reconstructed block and the to-be-encoded block.

In an optional embodiment, the storage medium is further configured to store computer-readable instructions for performing steps included in the methods according to the foregoing embodiments, and details are not repeated herein.

Those skilled in the art can understand that all or some of the steps of the methods in the foregoing embodiments may be implemented by a program instructing relevant hardware of a terminal device. The program may be stored in a computer-readable storage medium. The storage medium may include a flash disk, a read-only memory (ROM), a random access memory (RAM), a magnetic disk, an optical disc, or the like.

Sequence numbers in the foregoing embodiments of the present disclosure are merely for description purpose but do not imply preferences among the embodiments.

When the integrated unit in the foregoing embodiments is implemented in a form of a software functional unit and sold or used as an independent product, the integrated unit may be stored in the foregoing computer-readable storage medium. Based on such an understanding, an essence, a part contributing to the related art, or all or a part of the technical solutions of the present disclosure may be implemented in a form of a software product. The computer software product is stored in a storage medium and includes several instructions for instructing one or more computer devices (which may be a PC, a server, a network device, or the like) to perform all or some of steps of the methods in embodiments of the present disclosure.

In the foregoing embodiments of the present disclosure, the descriptions of the embodiments focus on different aspects. A part that is not described in detail in an embodiment may refer to related description in other embodiments.

In the several embodiments of the present disclosure, it should be understood that the disclosed client may be implemented in another manner. The apparatus embodiments described above are merely exemplary. For example, a division of the units is merely a division of logic functions, and other division manners may be adopted during actual implementations. For example, multiple units or components may be combined, or may be integrated into another system. Some features may be omitted or not performed. In addition, the coupling, or direct coupling, or communication connection among the displayed or discussed components may be indirect coupling or communication connection via some interfaces, units, or modules, and may be electrical or in other forms.

The units described as separate components may or may not be physically separated, and the components displayed as units may or may not be physical units. They may be located in one place or may be distributed among multiple network units. Some or all of the units may be selected according to actual needs to achieve the objectives of the solutions of the embodiments.

In addition, functional units in the embodiments of the present disclosure may be integrated into one processing unit, or each of the units may be physically separated, or two or more units may be integrated into one unit. The integrated unit may be implemented in a form of hardware, or may be implemented in a form of a software functional unit.

The foregoing descriptions are merely exemplary implementations of the present disclosure. Those in the art may further make several improvements and modifications without departing from the principle of the present disclosure, and the improvements and modifications fall within the protection scope of the present disclosure.

## Claims

1. A method for video decoding, performed by an electronic device, wherein the method comprises:
obtaining a first resolution adopted in decoding a to-be-decoded block and a second resolution adopted in decoding a reference block, wherein the to-be-decoded block and the reference block are in a to-be-decoded video frame, and the reference block is a block serving as a reference for directional prediction on the to-be-decoded block;
adjusting a reconstructed block of the reference block to have the first resolution, to obtain a first reconstructed block, in a case that the first resolution is higher than the second resolution; and
performing the directional prediction on the to-be-decoded block, according to the first reconstructed block and the to-be-decoded block.

2. The method according to claim 1, wherein adjusting the reconstructed block of the reference block to have the first resolution, to obtain the first reconstructed block, comprises:
up-sampling, through interpolation, first reference pixels in the reconstructed block of the reference block to obtain the first reconstructed block, wherein the up-sampled first reference pixels have the first resolution, and the first reference pixels are for the directional prediction on the to-be-decoded block; and
wherein performing the directional prediction on the to-be-decoded block according to the first reconstructed block and the to-be-decoded block comprises:
performing the directional prediction on the to-be-decoded block, according to the up-sampled first reference pixels and a prediction point in the to-be-decoded block, wherein the prediction point is a pixel for the directional prediction.

3. The method according to claim 1, wherein after obtaining the first resolution adopted in decoding the to-be-decoded block and the second resolution adopted in decoding the reference block, the method further comprises:
adjusting a reconstructed block of the reference block to have the first resolution, to obtain a second reconstructed block, in a case that the first resolution is lower than the second resolution; and
performing the directional prediction on the to-be-decoded block, according to the second reconstructed block and the to-be-decoded block.

4. The method according to claim 3, wherein adjusting the reconstructed block of the reference block to have the first resolution, to obtain the second reconstructed block, comprises:
down-sampling second reference pixels in the reconstructed block of the reference block to obtain the second reconstructed block, wherein the down-sampled second reference pixels have the first resolution, and the second reference pixels are for the directional prediction on the to-be-decoded block; and
wherein performing the directional prediction on the to-be-decoded block according to the second reconstructed block and the to-be-decoded block comprises:
performing the directional prediction on the to-be-decoded block, according to the down-sampled second reference pixels and a prediction point in the to-be-decoded block, wherein the prediction point is a pixel for the directional prediction.

5. The method according to claim 1, wherein after obtaining the first resolution adopted in decoding the to-be-decoded block and the second resolution adopted in decoding the reference block, the method further comprises:
determining third reference pixels in the reference block, in a case that the first resolution is lower than the second resolution, wherein the third reference pixels are for the directional prediction on the to-be-encoded block, and the third reference pixels in each reference block have a resolution equal to the first resolution; and
performing the directional prediction on the to-be-encoded block, according to the third reference pixels and a prediction point in the to-be-encoded block, wherein the prediction point is a pixel for the directional prediction.

6. A method for video encoding, performed by an electronic device, wherein the method comprises:
obtaining a first resolution adopted in encoding a to-be-encoded block and a second resolution adopted in encoding a reference block, wherein the to-be-encoded block and the reference block are in a to-be-encoded video frame, and the reference block is a block serving as a reference for directional prediction on the to-be-encoded block;
adjusting a reconstructed block of the reference block to have the first resolution, to obtain a first reconstructed block, in a case that the first resolution is higher than the second resolution; and
performing the directional prediction on the to-be-encoded block, according to the first reconstructed block and the to-be-encoded block.

7. The method according to claim 6, wherein adjusting the reconstructed block of the reference block to have the first resolution, to obtain the first reconstructed block, comprises:
up-sampling, through interpolation, first reference pixels in the reconstructed block of the reference block to obtain the first reconstructed block, wherein the up-sampled first reference pixels have the first resolution, and the first reference pixels are for the directional prediction on the to-be-encoded block; and
wherein performing the directional prediction on the to-be-encoded block according to the first reconstructed block and the to-be-encoded block comprises:
performing the directional prediction on the to-be-encoded block, according to the up-sampled first reference pixels and a prediction point in the to-be-encoded block, wherein the prediction point is a pixel for the directional prediction.

8. The method according to claim 6, wherein after obtaining the first resolution adopted in encoding the to-be-encoded block and the second resolution adopted in encoding the reference block, the method further comprises:
adjusting a reconstructed block of the reference block to have the first resolution, to obtain a second reconstructed block, in a case that the first resolution is lower than the second resolution; and
performing the directional prediction on the to-be-encoded block, according to the second reconstructed block and the to-be-encoded block.

9. The method according to claim 8, wherein adjusting the reconstructed block of the reference block to have the first resolution, to obtain the second reconstructed block, comprises:
down-sampling second reference pixels in the reconstructed block of the reference block to obtain the second reconstructed block, wherein the down-sampled second reference pixels have the first resolution, and the second reference pixels are for the directional prediction on the to-be-encoded block; and
wherein performing the directional prediction on the to-be-encoded block according to the second reconstructed block and the to-be-encoded block comprises:
performing the directional prediction on the to-be-encoded block, according to the down-sampled second reference pixels and a prediction point in the to-be-encoded block, wherein the prediction point is a pixel for the directional prediction.

10. The method according to claim 6, wherein after obtaining the first resolution adopted in encoding the to-be-encoded block and the second resolution adopted in encoding the reference block, the method further comprises:
determining third reference pixels in the reference block, in a case that the first resolution is lower than the second resolution, wherein the third reference pixels are for the directional prediction on the to-be-encoded block, and the third reference pixels in each reference block have a resolution equal to the first resolution; and
performing the directional prediction on the to-be-encoded block, according to the third reference pixels and a prediction point in the to-be-encoded block, wherein the prediction point is a pixel for the directional prediction.

11. An apparatus for video decoding, comprising:
a first obtaining unit, configured to obtain a first resolution adopted in decoding a to-be-decoded block and a second resolution adopted in decoding a reference block, wherein the to-be-decoded block and the reference block are in a to-be-decoded video frame, and the reference block is a block serving as a reference for directional prediction on the to-be-decoded block;
a first adjustment unit, configured to adjust a reconstructed block of the reference block to have the first resolution, to obtain a first reconstructed block, in a case that the first resolution is higher than the second resolution; and
a first prediction unit, configured to perform the directional prediction on the to-be-decoded block, according to the first reconstructed block and the to-be-decoded block.

12. The apparatus according to claim 11, wherein:
the first adjustment unit comprises a first adjustment module, configured to:
up-sample, through interpolation, first reference pixels in the reconstructed block of the reference block to obtain the first reconstructed block, wherein the up-sampled first reference pixels have the first resolution, and the first reference pixels are for the directional prediction on the to-be-decoded block; and the first prediction unit comprises a first prediction module, configured to:
perform the directional prediction on the to-be-decoded block, according to the up-sampled first reference pixels and a prediction point in the to-be-decoded block, wherein the prediction point is a pixel for the directional prediction.

13. The apparatus according to claim 11, further comprising:
a second adjustment unit, configured to adjust a reconstructed block of the reference block to have the first resolution, to obtain a second reconstructed block, in a case that the first resolution is lower than the second resolution; and
a second prediction unit, configured to perform the directional prediction on the to-be-decoded block, according to the second reconstructed block and the to-be-decoded block.

14. The apparatus according to claim 13, wherein:
the second adjustment unit comprises a second adjustment module, configured to:
down-sample second reference pixels in the reconstructed block of the reference block to obtain the second reconstructed block, wherein the down-sampled second reference pixels have the first resolution, and the second reference pixels are for the directional prediction on the to-be-decoded block; and
the second prediction unit comprises a second prediction module, configured to:
perform the directional prediction on the to-be-decoded block, according to the down-sampled second reference pixels and a prediction point in the to-be-decoded block, wherein the prediction point is a pixel for the directional prediction.

15. The apparatus according to claim 11, further comprising:
a determining unit, configured to determine third reference pixels in the reference block, in a case that the first resolution is lower than the second resolution, wherein the third reference pixels are for the directional prediction on the to-be-decoded block, and the third reference pixels in each reference block have a resolution equal to the first resolution; and
a third prediction unit, configured to perform the directional prediction on the to-be-decoded block, according to the third reference pixels and a prediction point in the to-be-decoded block, wherein the prediction point is a pixel for the directional prediction.

16. An apparatus for video encoding, comprising:
a first obtaining unit, configured to obtain a first resolution adopted in encoding a to-be-encoded block and a second resolution adopted in encoding a reference block, wherein the to-be-encoded block and the reference block are in a to-be-encoded video frame, and the reference block is a block serving as a reference for directional prediction on the to-be-encoded block;
a first adjustment unit, configured to adjust a reconstructed block of the reference block to have the first resolution, to obtain a first reconstructed block, in a case that the first resolution is higher than the second resolution; and
a first prediction unit, configured to perform the directional prediction on the to-be-encoded block, according to the first reconstructed block and the to-be-encoded block.

17. The apparatus according to claim 16, wherein:
the first adjustment unit comprises a first adjustment module, configured to:
up-sample, through interpolation, first reference pixels in the reconstructed block of the reference block to obtain the first reconstructed block, wherein the up-sampled first reference pixels have the first resolution, and the first reference pixels are for the directional prediction on the to-be-encoded block; and the first prediction unit comprises a first prediction module, configured to:
perform the directional prediction on the to-be-encoded block, according to the up-sampled first reference pixels and a prediction point in the to-be-encoded block, wherein the prediction point is a pixel for the directional prediction.

18. The apparatus according to claim 16, further comprising:
a second adjustment unit, configured to adjust a reconstructed block of the reference block to have the first resolution, to obtain a second reconstructed block, in a case that the first resolution is lower than the second resolution; and
a second prediction unit, configured to perform the directional prediction on the to-be-encoded block, according to the second reconstructed block and the to-be-encoded block.

19. One or more non-volatile computer-readable storage media, storing computer-readable instructions, wherein:
the computer-readable instructions when executed by one or more processors configure the one or more processors to perform the method according to any one of claims 1 to 10.

20. An electronic device, comprising:
a memory, and
one or more processors,
wherein the memory stores computer-readable instructions, and the computer-readable instructions when executed by the one or more processors configure the one or more processors to perform the method according to any one of claims 1 to 10.
